# FASCICULE DE BREVET EUROPEEN

(11) **EP 1 879 786 B1**
(45) Date de publication et mention de la délivrance du brevet: **11.03.2009**
(21) Numéro de dépôt: 06764620.8
(22) Date de dépôt: 12.05.2006
(51) Int. Cl.: B62D 65/16, B62D 25/08, B60Q 1/04

(54) **PROCEDE DE CONFORMATION D UNE PEAU DE PARE-CHOCS AUTOUR DE BLOCS OPTIQUES, RENFORT POUR PEAU DE PARE-CHOCS ET BLOC AVANT DE VEHICULE AUTOMOBILE**
VERFAHREN ZUR MONTAGE EINER STOSSFESTEN HÜLLE UM LICHTEINHEITEN, VERSTÄRKUNGSSTREBE FÜR EIN SOLCHES VERFAHREN, UND VORDERMODUL FÜR MOTORFAHRZEUGE
METHOD FOR FITTING A BUMPER SHELL AROUND LIGHT UNITS, REINFORCEMENT FOR USE IN SUCH A METHOD, AND FRONT MODULE UNIT FOR MOTOR VEHICLES

(30) Priorité: 12.05.2005 FR 0504793
(43) Date de publication de la demande: 23.01.2008
(73) Titulaire: Compagnie Plastic Omnium, 69007 Lyon (FR)
(72) Inventeur: FAYT, Arnold, F-01640 Jujurieux (FR)
(74) Mandataire: Thiollier, Clémence-Olivia Laure Marie
(86) Numéro de dépôt international: PCT/FR2006/001078
(87) Numéro de publication internationale: WO 2006/120359

(56) Documents cités:
- EP-A- 0 437 781
- EP-A- 0 853 032
- DE-A1- 10 042 562
- US-A- 5 066 057
- US-A1- 2002 073 529

## Description

La présente invention concerne un procédé de conformation d'une peau de pare-chocs en matière plastique autour de blocs optiques, un renfort pour peau de pare-chocs et un bloc avant de véhicule automobile.

On sait que le montage des éléments de carrosserie de l'avant du véhicule nécessite un positionnement très précis. En effet, pour des raisons esthétiques, les vitrages d'optiques, la peau de pare-chocs et les ailes doivent présenter un jeu convenable et arriver à affleurement.

Pour faciliter le positionnement, on connaît de FR 2838094 un support capable de conformer la peau de pare-chocs par rapport aux vitrages d'optiques et aux autres éléments de carrosserie, de façon à positionner convenablement l'ensemble des éléments de carrosserie avant de monter cet ensemble sur le véhicule. Ce support comporte éventuellement des moyens de liaison avec les ailes, si bien qu'il s'étend d'une aile à l'autre.

Le document EP 0 437 781 A2 décrit un procédé de conformation d'une peau de pare chocs en materière plastique autour de deux blocs optiques d'un véhicule automobile selon le préambule de la revendication 1.

Le problème consiste en ce que ce support s'étend sur une grande longueur, il doit avoir des dimensions semblables à celles de la peau. Comme ces deux pièces sont grandes, les dispersions se multiplient et leur couplage est rendu difficile.

La présente invention vise à remédier à cet inconvénient en fournissant un procédé de conformation de la peau de pare-chocs selon la revendication 1 dans lequel le couplage entre la peau et le support, ou renfort, est meilleur, ce qui assure un positionnement plus satisfaisant des éléments de carrosserie.

A cet effet, l'invention a pour objet un procédé de conformation d'une peau de pare-chocs en matière plastique autour d'au moins deux blocs optiques d'un véhicule automobile, à l'aide d'un renfort comprenant un certain nombre de parties, la peau comportant des zones destinées à recouvrir les différentes parties du renfort, chaque partie du renfort comprenant des moyens de fixation à l'un des blocs optiques dans une position prédéterminée, caractérisé en ce que l'on fixe d'abord les parties du renfort sur les zones correspondantes de la peau de pare-chocs, puis on assemble les parties du renfort aux blocs optiques.

De préférence, le renfort n'est plus composé d'une seule grande pièce de taille similaire à celle de la peau, mais de plusieurs pièces distinctes plus petites, chacune constituant une partie du renfort, les pièces plus petites étant moins sujettes aux dispersions de dimensions. Dans un autre mode de réalisation, les différentes parties sont réalisées d'un seul tenant, mais sont reliées par des liaisons souples. Quel que soit le mode de réalisation retenu, le fait de ne plus avoir à réaliser une grande pièce dont la géométrie doit être précisément contrôlée remédie au problème précité.

En outre, la peau est très précisément positionnée autour des blocs optiques, par l'intermédiaire de chacune des parties du renfort, sans pour autant présenter de déformations visibles à sa surface, du fait que les contraintes de positionnement sont réparties entre les parties du renfort. Au cours de ce procédé, ce sont les blocs optiques qui imposent le positionnement des parties du renfort, la peau s'adaptant à ce positionnement par de légères variations de son galbe.

On notera que, par définition, un bloc optique est constitué d'un boîtier d'optique et d'un vitrage d'optique. Lors du montage, on cherche à contrôler très précisément les jeux et affleurements des vitrages d'optiques avec les pièces de carrosserie voisines. Comme les vitrages et les boîtiers d'optiques sont généralement collés, on effectue de préférence le positionnement des pièces de carrosserie par rapport aux vitrages, mais on les fixe, par l'intermédiaire des parties du renfort, aux boîtiers. Les moyens de fixation du renfort aux blocs optiques coopèrent donc avec des moyens de fixation ménagés sur les vitrages et/ou boîtiers d'optiques.

Selon un mode de réalisation de l'invention, une fois assemblées aux blocs optiques, on fige les différentes parties du renfort les unes par rapport aux autres, grâce à des liaisons, de manière à pouvoir retirer les vitrages et/ou boîtiers d'optiques. Ainsi, on est capable de conformer la peau de pare-chocs pour lui donner un positionnement correct par rapport aux vitrages d'optiques, sans que ce positionnement ne soit perdu lorsque les blocs optiques sont démontés, ce qui permet de faciliter le montage du véhicule en usine, ou encore la réparation des blocs. Eventuellement, on effectue les liaisons par soudage, une fois les parties du renfort assemblées.

L'invention a également pour objet un renfort en plusieurs parties selon la revendication 4, pour la mise en oeuvre du procédé décrit ci-dessus.

Le renfort est composé d'une partie centrale et de deux parties latérales constituant des renforts de crosses de pare-chocs. Ces renforts de crosses, recouverts par les deux extrémités de la peau, ne sont pas directement solidaires de la partie centrale du renfort, et sont ainsi plus libres de suivre le positionnement imposé par les vitrages d'optiques, indépendamment du positionnement imposé à la partie centrale. Cette séparation permet donc de mieux répartir les déformations sur toute la surface de la peau.

De préférence également, la partie centrale comporte des moyens de positionnement par rapport à une traverse supérieure de face avant technique, ou bien par rapport au capot ou à la serrure de capot, et les parties latérales des moyens de positionnement par rapport aux ailes du véhicule. Ainsi, chacune des parties du renfort est précisément positionnée sur la caisse du véhicule et il est plus facile de les conformer que lorsque le renfort est constitué d'une unique partie de taille semblable à celle de la peau. Chacune des parties comporte donc des moyens de mise en référence, notamment dans la direction transversale du véhicule.

Selon un mode de réalisation, les renforts de crosses comprennent des presseurs de la peau de pare-chocs.

Eventuellement, le renfort comprend des moyens de support des ailes du véhicule, éventuellement des presseurs d'aile, permettant de positionner précisément les ailes par rapport à la peau.

Selon un mode de réalisation, le renfort comprend un absorbeur de chocs.

L'invention a également pour objet un bloc avant de véhicule automobile selon la revendication 11 comportant un module géométrique comprenant une peau de pare-chocs, des blocs optiques et le renfort décrit ci-dessus, rapporté sur un module structurel comprenant notamment la face avant technique et la poutre de pare-chocs du véhicule. Un tel module permet de positionner précisément la peau par rapport aux blocs optiques en dehors de la chaîne de montage du véhicule, puis de rapporter le tout à l'avant du module structurel.

L'invention sera mieux comprise à la lecture de la description qui va suivre, donnée uniquement à titre d'exemple et faite en se référant aux dessins dans lesquels :
- la figure 1 est un schéma de la partie gauche d'un renfort selon l'invention, assemblé à un bloc optique ; et
- la figure 2 est un schéma représentant le montage d'un bloc avant selon l'invention.

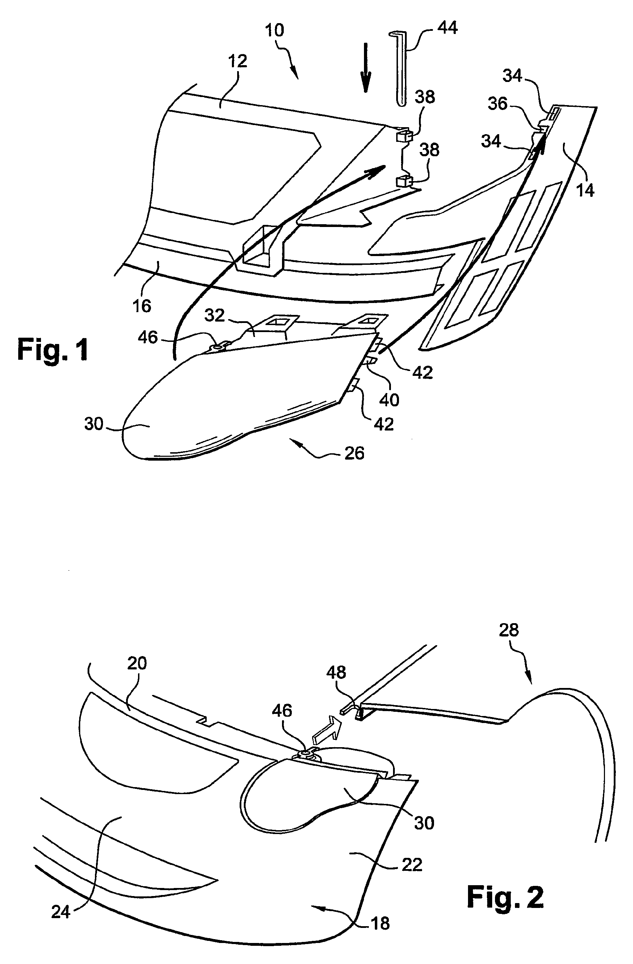

Un renfort 10 selon l'invention comprend plusieurs parties, constituées par des pièces distinctes en matière plastique, une partie centrale 12, deux parties latérales 14 et un absorbeur de chocs 16, visibles sur la figure 1. L'ensemble des parties de ce renfort 10 est destiné à être recouvert par une peau de pare-chocs18, ou bouclier de pare-chocs, visible sur la figure 2. On a représenté principalement la partie gauche du bloc avant, qui est globalement symétrique par rapport à la direction longitudinale du véhicule.

Lorsque le renfort 10 est fixé à la peau 18, la partie centrale 12 est recouverte par une zone 20 de la peau, recevant une grille de calandre. Les parties latérales 14, qui sont des renforts de crosses, sont recouverts par les crosses de pare-chocs 22. L'absorbeur 16 est recouvert par une zone 24 de la peau.

Le renfort 10 a pour but de positionner convenablement l'ensemble des pièces de carrosserie de l'avant du véhicule. Ces pièces de carrosserie comprennent la peau 18, deux blocs optiques 26, et deux ailes avant 28. Plus précisément, un bloc optique 26 comprend un vitrage 30 et un boîtier d'optique 32, et l'on positionne les pièces de carrosserie par rapport à ce vitrage 30.

Pour assurer un bon positionnement de l'ensemble des pièces, on conforme la peau 18 autour des vitrages 30. A cet effet, les parties 12 et 14 du renfort 10 comprennent des moyens de fixation au vitrage 30 et au boîtier 32, assurant le positionnement, dans une position prédéterminée, du renfort par rapport au bloc optique 26. Ces moyens de fixation comprennent des fentes 34 et une encoche 36 ménagées sur la partie supérieure des renforts de crosses 14, ainsi que des oeillets 38 ménagés sur la partie centrale 12.

Le procédé de conformation se fait de la façon suivante. Une fois que les parties 12, 14, 16 du renfort 10 sont fixées sur les zones correspondantes de la peau 18, par exemple par collage ou soudage, on assemble les parties 12, 14 du renfort avec le bloc optique 26. Plus précisément, on fait coopérer les moyens 34, 36 du renfort de crosses 14 avec un pion 40 et des languettes 42 ménagés sur le vitrage d'optique 30. En parallèle, on aligne les oeillets 38 et des oeillets ménagés sur le boîtier d'optique 32, de manière à faire pénétrer une tige 44 dans ces oeillets. On prévoit également, sur la partie centrale 12, des moyens de fixation (non représentés), semblables au moyens 34, 36, et qui coopèrent avec un pion et des languettes agencés sous le boîtier ou le vitrage, à l'opposé du pion 40 et des languettes 42.

Grâce à tous ces indexages agencés sur les parties 12, 14 du renfort et sur le bloc optique 26, on peut « tirer » sur les parties du renfort et donc conformer la peau autour des deux blocs optiques.

On notera que pour une meilleure fixation du renfort 10 sur la peau de pare-chocs 18, on peut munir les parties 12, 14 de presseurs de la peau de pare-chocs.

Une fois que le renfort et la peau sont assemblés aux blocs optiques, on peut monter le module géométrique constitué par ces éléments sur la caisse du véhicule, comprenant les ailes et un module structurel. Ce module structurel est muni de la face avant technique, du radiateur, et d'une ou deux poutres de chocs (voie haute et voie basse) du véhicule (non représentés). A cet effet, le boîtier d'optique 32 comporte des moyens de positionnement constitués par un pion 46, destiné à coopérer avec une encoche 48 ménagée dans l'aile 28. Il comporte également des moyens de fixation au véhicule, par exemple à la face avant technique, pour assurer son positionnement par rapport au capot ou à la serrure de capot.

Selon un mode de réalisation non représenté, se sont les parties 12, 14 du renfort qui comportent des moyens de positionnement par rapport à la caisse du véhicule, la partie centrale 12 du renfort étant positionnée par rapport à la traverse supérieure de la face avant technique, et les parties latérales 14 par rapport aux ailes du véhicule.

Selon un mode de réalisation non représenté, le renfort 10 comporte des zones qui dépassent des crosses de pare-chocs, servant de support des ailes du véhicule, ce sont par exemple des presseurs d'ailes.

Selon un autre mode de réalisation, une fois que le renfort est assemblé aux blocs optiques, les différentes parties 12, 14, 16 se chevauchent et on les fige les unes par rapport aux autres, par exemple en les soudant. Ceci permet de les positionner les unes par rapport aux autres même lorsque le bloc optique 26 est retiré du véhicule.

On notera enfin que la présente invention n'est pas limitée aux modes de réalisation précédemment décrits.

## Revendications

1. Procédé de conformation d'une peau (18) de pare-chocs en matière plastique autour d'au moins deux blocs optiques (26) d'un véhicule automobile, à l'aide d'un renfort (10) comprenant un certain nombre de parties (12, 14), la peau comportant des zones (20, 22) destinées à recouvrir les différentes parties du renfort, chaque partie (12, 14) du renfort comprenant des moyens (34, 36, 38) de fixation à l'un des blocs optiques (26) dans une position prédéterminée, **caractérisé en ce que** l'on fixe d'abord les parties (12, 14) du renfort sur les zones correspondantes de la peau de pare-chocs, puis on assemble les partieε du renfort aux blocs optiques.

2. Procédé de conformation selon la revendication 1, au cours duquel, une fois assemblées, on fige les différentes parties (12, 14) du renfort les unes par rapport aux autres, grâce à des liaisons, de manière à pouvoir retirer les blocs optiques.

3. Procédé de conformation selon la revendication 2, au cours duquel on effectue les liaisons par soudage.

4. Renfort (10) en plusieurs parties (12, 14, 16) pour la mise en oeuvre du procédé selon l'une quelconque des revendications 1 à 3, composé d'une partie centrale (12) et de deux parties latérales (14) constituant des renforts de crosses de pare-chocs, ces renforts de crosses étant destinés à être recouverts par les deux extrémités de la peau et n'étant pas directement solidaires de la partie centrale du renfort.

5. Renfort selon la revendication 4, composé de plusieurs pièces distinctes.

6. Renfort selon la revendication 4, dont les différentes parties sont réalisées d'un seul tenant et sont reliées par des liaisons souples.

7. Renfort selon la revendication 6, dans lequel la partie centrale comporte des moyens de positionnement par rapport à une traverse supérieure de face avant technique, et les parties latérales des moyens de positionnement par rapport aux ailes du véhicule.

8. Renfort selon la revendication 7, dans lequel les rentorts de crosses comprennent des presseurs de la peau de pare-chocs.

9. Renfort selon l'une quelconque des revendications 4 à 8, comprenant des moyens de support des ailes du véhicule. éventuellement des presseurs d'aile.

10. Renfort selon l'une quelconque des revendications 4 à 8, comprenant un absorbeur (16) de chocs.

11. Bloc avant de véhicule automobile comportant un module géométrique comprenant une peau de pare-chocs (18), des blocs optiques (26) et un renfort (10) selon l'une quelconque des revendications 4 à 10, rapporté sur un module structurel comprenant la face avant technique et la poutre de pare-chocs du véhicule.

## Claims

1. A method for shaping a bumper skin (18) of plastics material around at least two light units (26) of a motor vehicle, with the help of reinforcement (10) comprising a certain number of portions (12, 14), the skin having zones (20, 22) for covering the various portions of the reinforcement, each portion (12, 14) of the reinforcement including means (34, 36, 38) for fastening it to one of the light units (26) in a predetermined position, the method being **characterized in that** the portions (12, 14) of the reinforcement are initially fastened to the corresponding zones of the bumper skin, and then the portions of the reinforcement are assembled to the light units.

2. A shaping method according to claim 1, during which, once the various portions (12, 14) of the reinforcement have been assembled relative to one another, they are themselves fixed together by connections so as to enable the light units to be withdrawn.

3. A shaping method according to claim 2, in which the connections are made by heat-sealing.

4. Reinforcement (10) made up of a plurality of portions (12, 14, 16) for implementing the method according to any one of claims 1 to 3, comprising a central portion (12) and two side portions (14) constituting bumper overrider reinforcements, those reinforcements being intended to be covered by the two ends of the skin and being not directly fastened to the central portion of the reinforcement.

5. Reinforcement according to claim 4, comprising a plurality of separated parts.

6. Reinforcement according to claim 4, in which various portions are made as a single piece and are connected together by flexible connections.

7. Reinforcement according to claim 6, in which the central portion includes means for positioning it relative to a front end module top cross-member, and the side portions include positioning means for positioning them relative to vehicle fenders.

8. Reinforcement according to claim 7, in which the overrider reinforcing members include bumper skin pressers.

9. Reinforcement according to any one of claims 4 to 8, including means for supporting vehicle fenders, possibly fender pressers.

10. Reinforcement according to any one of claims 4 to 8, including an impact absorber (16).

11. A motor vehicle front unit comprising a geometrical module comprising a bumper skin (18), light units (26), and reinforcement (10) according to any one of claims 4 to 10, fitted onto a structural module comprising the front end module and the bumper beam of a vehicle.

## Patentansprüche

1. Verfahren zum Formen einer Haut (18) eines Stoßfängers aus Kunststoff um wenigstens zwei Optikblöcke (26) eines Kraftfahrzeugs mit Hilfe einer Verstärkung (10) umfassend eine bestimmte Anzahl von Teilen (12, 14), wobei die Haut zum Abdecken der verschiedenen Teile der Verstärkung bestimmte Zonen (20, 22) umfasst, wobei jedes Teil (12, 14) der Verstärkung Mittel (34, 36, 38) zur Befestigung an einem der Optikblöcke (26) in einer vorbestimmten Position umfasst, **dadurch gekennzeichnet, dass** zuerst die Teile (12, 14) der Verstärkung auf den entsprechenden Zonen der Haut des Stoßfängers befestigt werden und anschließend die Teile der Verstärkung an den Optikblöcken montiert werden.

2. Verfahren zum Formen nach Anspruch 1, bei dem nach der Montage die verschiedenen Teile (12, 14) der Verstärkung zueinander durch Verbindungen so fixiert werden, dass die Optikblöcke entfernt werden können.

3. Verfahren zum Formen nach Anspruch 2, bei dem die Verbindungen durch Schweißen ausgeführt werden.

4. Verstärkung (10) aus mehreren Teilen (12, 14, 16) zum Durchführen des Verfahrens nach einem der Ansprüche 1 bis 3, bestehend aus einem Mittelteil (12) und zwei Seitenteilen (14), welche die Verstärkungen der Seitenschenkel des Stoßfängers bilden, wobei diese Verstärkungen der Seitenschenkel dazu bestimmt sind, von den beiden Enden der Haut abgedeckt zu werden und nicht direkt mit dem Mittelteil der Verstärkung verbunden zu sein.

5. Verstärkung nach Anspruch 4, bestehend aus mehreren verschiedenen Teilen.

6. Verstärkung nach Anspruch 4, bei der die verschiedenen Teile aus einem Teil bestehen und durch elastische Verbindungen verbunden sind.

7. Verstärkung nach Anspruch 6, wobei der Mittelteil Mittel zum Positionieren zu einem oberen Querträger eines technischen Vorderteils und die Seitenteile Mittel zum Positionieren zu den Kotflügeln des Fahrzeugs umfasst.

8. Verstärkung nach Anspruch 7, wobei die Verstärkungen der Seitenschenkel Andrücker der Haut des Stoßfängers umfassen.

9. Verstärkung nach einem der Ansprüche 4 bis 8, umfassend Mittel zum Stützen der Kotflügel des Fahrzeugs, ggf. Kotflügelandrücker.

10. Verstärkung nach einem der Ansprüche 4 bis 8, umfassend einen Dämpfer (16) von Stößen.

11. Frontpartie eines Kraftfahrzeugs umfassend ein geometrisches Modul umfassend eine Stoßfängerhaut (18), Optikblöcke (26) und eine Verstärkung (10) nach einem der Ansprüche 4 bis 10, befestigt auf einem Strukturmodul umfassend das technische Vorderteil und den Stoßfängerträger des Fahrzeugs.
